# FASCICULE DE BREVET EUROPEEN

(11) **EP 4 357 626 B1**
(45) Date de publication et mention de la délivrance du brevet: **15.01.2025**
(21) Numéro de dépôt: 23187571.7
(22) Date de dépôt: 25.07.2023
(51) Int. Cl.: F16B 5/06, F16B 31/02, F16B 39/08

(54) **PROCEDE DE SERRAGE ET DE CONTROLE D'UN SYSTEME DE VISSAGE**
VERFAHREN ZUM SPANNEN UND ÜBERWACHEN EINES SCHRAUBSYSTEMS
METHOD FOR TIGHTENING AND CONTROLLING A SCREWING SYSTEM

(30) Priorité: 18.10.2022 FR 2210739
(43) Date de publication de la demande: 24.04.2024
(73) Titulaire: Airbus Helicopters, 13725 Marignane Cedex (FR)
(72) Inventeur: DEVILLIERS, Georges, 13009 MARSEILLE (FR)
(74) Mandataire: GPI Brevets

(56) Documents cités:
- WO-A1-2021/104679
- FR-A1- 3 098 260
- US-B2- 7 698 949

## Description

La présente invention concerne un procédé de serrage et de contrôle d'un système de vissage.

Deux pièces mécaniques peuvent être serrées l'une contre l'autre à l'aide d'un système de vissage. Un tel système comprend une tige filetée à visser à un écrou. Une tige filetée peut faire partie d'une vis, d'un goujon, être solidaire d'une pièce à assembler.

Les deux pièces mécaniques sont alors serrées par le système de vissage.

En utilisation, la tige filetée et l'écrou peuvent se desserrer, par exemple en présence de vibrations, en raison des conditions environnementales voire en raison de l'usure de l'assemblage serré.

Pour limiter les risques de desserrage, l'écrou peut prendre la forme d'un écrou à freiner coopérant avec un frein.

Un écrou à freiner peut être un écrou à créneaux. Un tel écrou à créneaux comprend un tronçon annulaire muni de fentes, deux fentes successives étant séparées par une séparation en forme de créneau. De plus, l'extrémité de la tige filetée à visser à l'écrou peut comprendre un orifice traversant. Dès lors, un frein de type goupille peut être inséré dans deux fentes de l'écrou diamétralement opposées et dans l'orifice traversant de la tige filetée. La goupille traverse ainsi successivement une première fente de l'écrou, l'orifice traversant, puis une deuxième fente de l'écrou.

Selon un autre exemple, une rondelle de freinage comporte un anneau portant une languette interne et une languette externe rabattable formant un frein. La languette interne peut être positionnée dans une rainure de la tige filetée pour immobiliser en rotation la rondelle de freinage par rapport à cette tige filetée. Lorsque l'écrou est correctement vissé, la languette externe est rabattue dans une encoche ou contre un pan de l'écrou à freiner.

Quelle que soit la variante, lors de l'assemblage des pièces mécaniques, un opérateur visse alors l'écrou à la tige filetée en appliquant un couple de serrage nominal prédéterminé à l'aide d'une clé dynamométrique. Le cas échéant, l'opérateur peut légèrement baisser ou augmenter le couple de serrage afin de positionner le frein.

Avec un écrou à créneaux, l'opérateur aligne l'orifice traversant de la tige filetée avec deux fentes de l'écrou. Ensuite, l'opérateur positionne la goupille. La goupille tend ainsi à éviter une rotation relative non désirée de la tige filetée et de l'écrou.

Avec une rondelle de freinage à languette rabattable, l'opérateur ajuste la position d'un pan ou d'une encoche de l'écrou par rapport à la languette rabattable.

En présence de pièces critiques, des actions de maintenance régulières peuvent avoir lieu afin de vérifier le serrage du système de vissage. La procédure dé vérification d'un tel serrage peut comprendre une étape de desserrage du système de vissage puis une étape de resserrage au couple nominal. De telles étapes de desserrage et de resserrage peuvent être difficiles et longues à réaliser dans un environnement encombré et/ou difficile d'accès, par exemple au sein d'un système mécanique d'un aéronef.

Le document FR 3 098 260 A1 décrit un boulon pourvu d'un système de blocage pour immobiliser en rotation un écrou par rapport à une tige filetée. Ce système de blocage comprend une épingle traversant la tige filetée. Une bague de blocage et l'écrou présentent des formes complémentaires pour les rendre solidaires en rotation. La bague de blocage comprend un couple de fentes hélicoïdales configurées chacune pour loger une partie de l'épingle.

Le document WO2021/104679 A1 décrit une autre technologie ayant une rondelle instrumentée pour déterminer une charge de serrage axiale d'un système de vissage assemblé La rondelle instrumentée comprend un corps de rondelle annulaire. Au moins une jauge de déformation est disposée sur une paroi latérale circonférentielle externe du corps de rondelle. Cette jauge de déformation est configurée pour détecter une déformation du corps de rondelle due aux forces de serrage de l'assemblage boulonné. La rondelle instrumentée comprend en outre un ensemble de communication connecté de manière opérationnelle à la ou aux jauges de déformation. L'ensemble de communication peut comprendre un circuit intégré adapté pour recevoir des signaux électriques provenant de la ou des jauges de déformation. Le ou les signaux électriques reçus peuvent être convertis en un signal porteur d'une charge de serrage axiale du système de vissage par le circuit intégré ou par un dispositif externe.

Selon ce document WO2021/104679 A1, la rondelle instrumentée peut ainsi émettre un signal variant en fonction d'une charge de serrage axiale d'un système de vissage.

Le document US 7698949 B2 décrit une rondelle active pour inspecter et surveiller une structure sous des fixations porteuses telles que des vis et des écrous. La rondelle active peut être utilisée afin d'inspecter un assemblage. Une rondelle active peut comprendre des transducteurs à ultrasons émettant des signaux d'inspection dans l'assemblage et réfléchis ou reçus par une autre rondelle active sur le côté opposé de l'assemblage.

Le document EP 3567354 B1 est éloigné de la problématique de l'invention en décrivant un système pour appliquer une tension sur un système de vissage.

La présente invention a alors pour objet de proposer un procédé de serrage et de contrôle innovant visant à garantir le serrage correct d'un système de vissage.

L'invention vise un procédé de serrage et de contrôle d'un système de vissage serrant un assemblage, le système de vissage comprenant une tige filetée et au moins un écrou à freiner vissés l'un à l'autre ainsi qu'un frein coopérant avec la tige filetée et l'écrou à freiner un système de mesure déterminant une charge de serrage axiale dans le système de vissage.

Le procédé comporte une phase initiale de serrage comprenant successivement les étapes suivantes :
- serrage du système de vissage à un couple nominal prédéterminé avec une clé dynamométrique,
- mesure d'une charge de serrage axiale initiale dans le système de vissage avec le système de mesure,
- ajustement d'une position de l'écrou à freiner par rapport à la tige filetée pour le placement dudit frein,
- mesure d'une charge de serrage axiale finale avec le système de mesure,
- vérification que la charge de serrage axiale finale est comprise dans une plage de conformité.

L'expression « couple nominal prédéterminé » désigne de manière classique un couple de serrage spécifié/imposé par le concepteur pour serrer l'assemblage. Ce couple nominal prédéterminé peut être établi de manière usuelle.

L'ajustement d'une position de l'écrou à freiner par rapport à la tige filetée pour le placement dudit frein peut comprendre une simple vérification que le frein peut être mis en place, par exemple en vérifiant qu'un orifice traversant de la tige filetée est aligné avec deux fentes de l'écrou à freiner ou en vérifiant qu'une languette de freinage peut être pliée contre un pan de l'écrou à freiner ou dans une encoche de l'écrou à freiner. Alternativement, cet ajustement peut comprendre un serrage ou desserrage du système de vissage dans une plage de couple autorisée, et par exemple un serrage afin d'appliquer un couple de serrage supérieur au couple nominal, cette étape pouvant être réalisée avec une clé simple.

La tige filetée est à visser à au moins un écrou à freiner. La tige filetée peut être en outre vissée à un second écrou et éventuellement un écrou à freiner, peut être solidaire d'une tête, voire peut être solidaire d'une pièce de l'assemblage.

Un écrou à freiner peut être par exemple un écrou à créneaux. Un tel écrou à créneaux peut comprendre une base formant un écrou à visser à la tige filetée et une portion fendue munie de fentes. La portion fendue peut être solidaire de la base, ou peut faire partie d'une bague disposée sur la base. Un frein peut alors s'étendre dans deux fentes diamétralement opposées de l'écrou à créneaux et dans un orifice traversant de la tige filetée disposée entre les deux fentes.

Un écrou à freiner peut être par exemple un écrou coopérant avec une languette de freinage. Par exemple, le système de vissage comporte alors une rondelle de freinage munie d'une languette externe pouvant être rabattue sur une encoche ou un pan de l'écrou, la rondelle de freinage pouvant avoir en outre une languette interne disposée dans une rainure de la tige filetée.

Le système de mesure peut comprendre un contrôleur recevant un ou des signaux de mesure émis par au moins un senseur de tension dans la tige filetée, et par exemple par une ou des jauges de contrainte. La ou les senseurs de tension dans la tige filetée peuvent être par exemple présents sur une rondelle instrumentée disposée sur la tige filetée, sur une tête de vis solidaire de la tige filetée, sur l'écrou à freiner, voire sur l'assemblage. Le système de mesure peut, par exemple, être du type décrit dans le document WO2021/104679 A1. Un contrôleur peut comprendre un calculateur. Le calculateur peut être configuré pour déterminer une charge de serrage axiale à chaque point de mesure.

Dès lors, la phase initiale de serrage comprend une double vérification que le système de vissage est correctement serré. La première vérification est de fait réalisée en vissant le système de vissage à un couple de serrage nominal. La deuxième vérification consiste à vérifier que la charge de serrage axiale finale est dans une plage de conformité acceptable, cette plage de conformité pouvant être fixe ou calculée comme décrit par la suite. Cette deuxième vérification peut être réalisée à l'aide d'un vérificateur du contrôleur.

Dans la négative, le système de vissage n'est pas correctement serré. Le contrôleur peut alors émettre une alerte. La phase initiale de serrage peut être réalisée une deuxième fois, avec le même système de vissage si un couple maximal autorisé n'a pas été dépassé ou un autre système de vissage.

Ainsi le procédé permet de réaliser facilement et rapidement deux étapes de vérification du serrage, une par le biais du serrage initial au couple nominal et l'autre en comparant une mesure du système de mesure à une plage de conformité. La vérification que la charge de serrage axiale finale est dans la plage de conformité nécessite simplement de déterminer la charge de serrage axiale finale avec le système de mesure déjà installé, et non pas un desserrage/resserrage.

Un tel procédé n'est pas évoqué par le document WO2021/104679 A1 et permet d'obtenir et de garantir un serrage répondant aux spécifications techniques facilement et rapidement.

Le procédé peut comporter une ou plusieurs des caractéristiques qui suivent, prises seules ou en combinaison.

Le procédé peut comporter une phase de vérification comprenant : mesure d'une charge de serrage axiale de vérification avec le système de mesure et vérification que la charge de serrage axiale de vérification est comprise dans la plage de conformité.

La phase initiale de serrage est réalisée lors d'un serrage initial de l'assemblage.

Par la suite, une phase de vérification peut être entreprise à de multiples occurrences pour vérifier que les conditions d'utilisation du système de vissage n'ont pas provoquées un desserrage inacceptable. Cette phase de vérification nécessite simplement de mesurer la charge de serrage axiale de vérification, avec le système de mesure déjà installé, et non pas un desserrage/resserrage potentiellement chronophage. Les opérations de surveillance sont ainsi facilitées.

Eventuellement, la phase de vérification peut être réalisée périodiquement à une fréquence prédéterminée.

Un manuel d'utilisation peut prévoir de réaliser une phase de vérification au bout d'un temps prédéterminé de fonctionnement, par exemple toutes les 50 heures d'utilisation. Cette durée est juste donnée à titre illustratif.

Selon une possibilité compatible avec les précédentes, le procédé peut comporter une émission d'une alerte de maintenance prédéterminée si la charge de serrage axiale de vérification est en dehors de la plage de conformité.

Le contrôleur peut émettre un signal d'alerte transmis à un alerteur lorsque la charge de serrage axiale de vérification est en dehors de la plage de conformité.

Selon une possibilité compatible avec les précédentes, le système de vissage peut être agencé sur un aéronef, le procédé pouvant comporter l'émission d'une interdiction de vol dès que la charge de serrage axiale de vérification est en dehors de la plage de conformité, voire l'émission d'une autorisation de vol lorsque la charge de serrage axiale de vérification est comprise dans la plage de conformité.

Le contrôleur peut émettre un signal d'alerte transmis à un alerteur, l'alerteur générant une alerte indiquant si le vol de l'aéronef est interdit voire autorisé.

Selon une possibilité compatible avec les précédentes, le procédé peut comporter une mémorisation de la charge de serrage axiale initiale, ou de la charge de serrage axiale finale, ou de la charge de serrage axiale initiale et de la charge de serrage axiale finale.

La charge de serrage axiale initiale est l'image du couple de serrage nominal appliqué et peut ainsi représenter une référence exploitable lors des vérifications qui suivent.

Selon une possibilité compatible avec les précédentes, la plage de conformité peut être prédéterminée.

La plage de conformité peut être déterminée par essais par exemple.

En effet, la tige filetée et l'écrou à freiner peuvent être dimensionnés pour garantir que le serrage ou le desserrage à réaliser éventuellement pour positionner le frein, suite au serrage au couple nominal, reste dans une plage acceptable.

Alternativement, le procédé peut comporter un calcul de la plage de conformité, en fonction de la charge de serrage axiale initiale qui peut servir de référence comme expliqué précédemment.

Par exemple, le procédé peut comporter un calcul de la plage de conformité, la plage de conformité s'étendant de la charge de serrage axiale initiale moins une marge inférieure prédéterminée à la charge de serrage axiale initiale plus une marge supérieure prédéterminée.

La marge inférieure et la marge supérieure peuvent être prédéterminées par le constructeur, par essais par exemple. La marge inférieure et la marge supérieure peuvent être égales.

Selon une possibilité compatible avec les précédentes, préalablement à la mesure d'une charge de serrage axiale finale avec le système de mesure, le procédé peut comporter un positionnement du frein.

Selon une possibilité compatible avec les précédentes, la tige filetée peut comprendre un orifice traversant, l'écrou à freiner étant un écrou à créneaux comprenant une pluralité de fentes réparties en azimut autour d'un axe, le frein traversant lesdites deux fentes et ledit orifice traversant.

Le frein peut par exemple prendre la forme d'une goupille, et en particulier d'une goupille fendue.

Selon un autre exemple, l'écrou à freiner est un écrou coopérant avec une rondelle de freinage. Par exemple, la tige filetée comprend une rainure longitudinale dans laquelle est disposée une languette interne de la rondelle de freinage. La rondelle de freinage peut en outre comprendre au moins une languette externe pouvant être pliée afin d'être introduite dans une encoche longitudinale externe de l'écrou à freiner ou contre un pan de l'écrou à freiner.

Selon une possibilité compatible avec les précédentes, la mesure d'une charge de serrage axiale finale avec le système de mesure peut être réalisée à l'issue d'au moins une durée prédéterminée après ledit ajustement d'une position de l'écrou à freiner par rapport à la tige filetée pour le placement dudit frein ou après un positionnement du frein.

Dès lors, cette caractéristique vise à déterminer la charge de serrage axiale finale après une durée minimale, afin de prendre en considération un éventuel desserrage en raison des conditions environnementales par exemple. Par exemple, cette durée minimale prédéterminée est de l'ordre de 24 heures.

Selon une possibilité compatible avec les précédentes, la marge inférieure et la marge supérieure peuvent être égales.

Par exemple, la marge inférieure et/ou la marge supérieure sont égales à un pourcentage prédéterminée de la charge de serrage axiale initiale.

L'invention vise aussi un système apte à mettre en œuvre ce procédé.

Ainsi, l'invention vise aussi un système de contrôle pour contrôler un serrage d'un système de vissage serrant un assemblage, le système de vissage comprenant une tige filetée et un écrou à freiner, le système de contrôle comprenant un système de mesure déterminant une charge de serrage axiale dans le système de vissage, le système de mesure comprenant au moins un senseur de tension dans la tige filetée. Un tel senseur de tension peut comprendre au moins une jauge de contrainte. Un tel senseur de tension peut être agencé sur une rondelle instrumentée, ou sur une tête de vis solidaire de la tige filetée par exemple.

Le système de contrôle est configuré pour appliquer le procédé de l'invention précédemment décrit, le système de contrôle comprenant un contrôleur configuré pour effectuer ladite vérification que la charge de serrage axiale finale est comprise dans la plage de conformité. A cet effet, le contrôleur est en communication avec le ou les senseurs de tension dans la tige fileté.

Le contrôleur peut comprendre une ou plusieurs unités, voire une unité portée par la rondelle ou la tête de vis instrumentée ou en communication filaire ou non filaire avec cette rondelle ou tête de vis instrumentée.

Par exemple, le contrôleur peut être configuré pour calculer ladite plage de conformité, éventuellement en fonction de la charge de serrage axiale initiale et/ou de la charge de serrage axiale finale. Selon un exemple, le contrôleur peut par exemple appliquer une formule mathématique fournissant la plage de conformité en fonction de la charge de serrage axiale initiale

Par exemple, le contrôleur peut être configuré pour effectuer une vérification que la charge de serrage axiale de vérification est dans la plage de conformité.

Par exemple, le contrôleur peut être configuré pour émettre une interdiction de vol voire une autorisation de vol en fonction de ladite vérification que la charge de serrage axiale de vérification est dans la plage de conformité.

L'invention et ses avantages apparaîtront avec plus de détails dans le cadre de la description qui suit avec des exemples donnés à titre illustratif en référence aux figures annexées qui représentent :
la figure 1, un schéma illustrant des étapes de serrage au couple nominal et de mesure d'une charge de serrage axiale initiale d'une phase de serrage selon le procédé de l'invention,
la figure 2, un schéma illustrant une étape de serrage/desserrage d'une phase de serrage selon le procédé de l'invention,
la figure 3, un schéma illustrant une étape d'agencement d'un frein selon le procédé de l'invention,
la figure 4, un schéma illustrant des étapes de mesure d'une charge de serrage axiale finale et de vérification de cette charge de serrage axiale finale d'une phase de serrage selon le procédé de l'invention, et
la figure 5, un schéma illustrant des étapes de mesure d'une charge de serrage axiale de vérification et de vérification de cette charge de serrage axiale vérification lors d'une phase de vérification selon le procédé de l'invention.

Les éléments présents dans plusieurs figures distinctes sont affectés d'une seule et même référence.

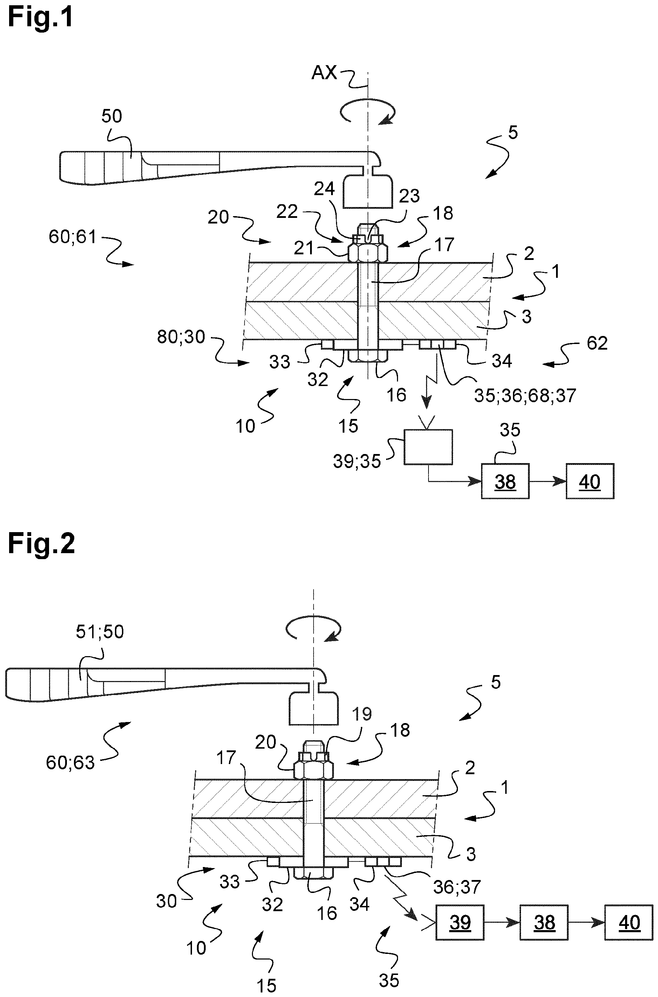

La figure 1 illustre un procédé de serrage sollicitant un système de contrôle selon l'invention.

Un système de vissage 10 peut être utilisé pour serrer un assemblage 1. Un tel assemblage 1 peut être agencé sur n'importe quel système, et notamment sur un véhicule voire en particulier sur un aéronef 5.

Un tel assemblage 1 peut comprendre au moins deux pièces mécaniques 2, 3 à serrer l'une contre l'autre.

Pour serrer un assemblage 1, un système de vissage 10 peut être utilisé.

Le système de vissage 10 est muni d'une tige filetée 17 ayant un filetage mâle à visser à un filetage femelle d'au moins un écrou à freiner 20.

Selon l'exemple illustré, la tige filetée 17 peut être solidaire d'une tête de vis 16 pour former une vis 15. Selon d'autres exemples, la tige filetée peut être vissée à deux écrous ou peut être solidaire d'une des pièces mécaniques 2, 3 à serrer.

Selon l'exemple illustré, l'écrou à freiner 20 est un écrou à créneaux. Un écrou à créneaux peut comprendre une base 21 ayant un tronçon de filetage femelle et un tronçon 22 à fentes 23. Ce tronçon 22 présente ainsi une succession de fentes 23 réparties en azimut autour d'un axe AX, deux fentes adjacentes étant séparées en azimut par une séparation 24. L'écrou peut comprendre un nombre pair de fentes, chaque fente étant diamétralement opposée à une autre fente au regard de l'axe AX. Chaque fente 23 peut s'étendre radialement au regard de l'axe AX, chaque séparation 24 s'étendant circonférentiellement au regard de l'axe AX entre deux fentes 23. Le tronçon 22 peut avoir une forme annulaire.

La base 21 peut être prolongée par le tronçon 22 à fentes 23. Alternativement, le tronçon 22 à fentes 23 peut être emmanché sur la base lorsque la base est vissée à la tige filetée.

Les séparations 24 peuvent être filetées afin de définir un tronçon de filetage femelle dans le prolongement du tronçon de filetage femelle de la base 21.

Selon un autre exemple, l'écrou à freiner 20 peut être un écrou coopérant avec une rondelle de freinage muni d'au moins une languette externe rabattable dans une encoche ou contre un pan de l'écrou à freiner 20.

Afin de pérenniser le serrage, le système de vissage comporte un frein 25.

Par exemple, une zone d'extrémité 18 de la tige filetée 17 coopérant avec un écrou à freiner de type écrou à créneaux peut comporter un orifice traversant 19, à savoir un orifice débouchant à l'extérieur de la tige filetée 17 selon deux sens opposés. Un frein 25 peut alors traverser l'orifice traversant 19 et deux fentes 23 d'un écrou à créneaux 20. Cet orifice traversant 19 et le frein 25 ne sont pas visibles sur le figure 1 mais visibles sur d'autres figures décrites par la suite. Cet orifice traversant 19 peut s'étendre diamétralement au regard d'un cercle centré sur ledit axe AX.

En présence d'un système à languettes, une rondelle de freinage peut comprendre une languette interne disposée dans une rainure de la tige filetée 17 et une languette externe pliée dans une encoche ou contre un pan de l'écrou à freiner.

Selon l'exemple illustré, une vis 15 comporte une tête 16 solidaire de la tige filetée 17, un assemblage pouvant être serré selon ledit axe AX entre la tête 16 et l'écrou à freiner de type écrou à créneaux 20.

Selon un autre exemple non illustré, la tige filetée 17 peut être vissée à deux écrous, un assemblage pouvant être serré selon ledit axe AX entre deux écrous, au moins un des deux écrous pouvant être un écrou à créneaux 20.

Selon un autre exemple non illustré, la tige filetée 17 peut comprendre un pied solidaire d'une pièce de l'assemblage 1.

Par ailleurs, le système de vissage 10 peut coopérer avec un système de contrôle 80. Le système de contrôle 80 a pour fonction de contrôler le serrage du système de vissage 10.

Le système de contrôle 80 comprend dès lors un système de mesure 30 configuré pour déterminer une valeur d'une charge de serrage axiale dans le système de vissage 10.

A cet effet, le système de mesure 30 est muni d'au moins un senseur 33 de tension dans la tige filetée. Un tel senseur 33 de tension dans la tige filetée peut comprendre par exemple une ou des jauges de contrainte disposées sur une rondelle instrumentée ou sur la tête 16 voire sur l'assemblage par exemple.

Ce système de mesure 30 peut par exemple comprendre une rondelle instrumentée 31 traversée par tige filetée 17 et serrée. Par exemple, la rondelle instrumentée 31 peut être serrée entre une tête 16 solidaire de tige filetée 17 et l'assemblage 1, ou entre un écrou du système de vissage 10 et l'assemblage 1.

La rondelle instrumentée 31 peut en particulier comprendre un corps de rondelle 32 traversé par la tige filetée 17. Ce corps de rondelle 32 peut porter au moins une jauge de déformation 33. Par exemple, une telle jauge de déformation 33 peut être disposée sur une paroi latérale circonférentielle externe du corps de rondelle 32. Cette jauge de déformation 33 est configurée pour émettre un signal de mesure variant en fonction d'une déformation du corps de la rondelle 32 due aux forces de serrage du système de vissage 10.

Le système de contrôle 80 peut comprendre un ou des éléments du système décrit dans le document WO2021/104679 A1.

Par ailleurs, le système de mesure 30 comprend en outre un contrôleur 35 pour appliquer le procédé de l'invention et déterminer si le système de vissage 10 est serré conformément à des exigences prédéfinies.

Par exemple, le contrôleur 35 peut comprendre un calculateur 37 configuré pour calculer une charge de serrage axiale transmise par le système de vissage à l'aide du ou des senseurs 33 de tension dans la tige filetée 17, et/ou une mémoire 36 pour mémoriser au moins une charge de serrage axiale calculée ou un signal de mesure, et/ou un lecteur 39 pour acquérir des données mémorisées dans une rondelle instrumentée 31 ou une vis instrumentée éventuelle, un ou des signaux émis par le ou les senseurs 33 de tension dans la tige filetée, voire pour alimenter électriquement des éléments passifs disposés sur une rondelle instrumentée 31 ou une vis instrumentée éventuelle, et/ou un vérificateur 38 pour vérifier qu'une charge de serrage axiale calculée est acceptable.

Le calculateur 37 et/ou la mémoire 36 éventuelle, et/ou le vérificateur 38 peuvent être agencés au sein d'une rondelle instrumentée 31 voire sur la vis 15 ou être déportés en dehors de cette rondelle instrumentée 31 et de cette vis 15.

Le calculateur 37 et/ou le vérificateur 38 peuvent comprendre au moins une unité de traitement. Une unité de traitement peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Selon l'exemple illustré, la rondelle instrumentée 31 comporte un support 34 solidaire du corps de rondelle 32. Ce support 34 porte un calculateur 37 relié à une antenne et à une mémoire 36 mémorisant des charges de serrage axiale mesurées. Un lecteur 39 peut communiquer par une liaison sans fil avec le calculateur 37. Le lecteur 39 alimente électriquement la rondelle instrumentée 31. La ou les jauges de contrainte 33 émettent un ou des signaux de mesure transmis au calculateur 37 qui est configuré pour en déduire une charge de serrage axiale et la transmettre au lecteur 39. Le lecteur 39 peut ensuite transmettre la charge de serrage axiale calculée à un vérificateur 38, intégré ou non au lecteur 39, qui vérifie si cette charge de serrage axiale est acceptable. Le vérificateur 38 peut alors communiquer avec un alerteur 40.

Selon une autre caractéristique, l'alerteur 40 est apte à générer au moins une alerte en fonction du signal transmis par le vérificateur 38. Chaque alerte peut prendre la forme d'une alarme visuelle, par exemple par le biais de l'émission d'une lumière avec une diode électroluminescente ou un équivalent ou de l'affichage sur un écran d'un ou de plusieurs caractères, d'une alarme sonore, par le biais d'un haut-parleur, et/ou d'une alarme haptique, par exemple à l'aide d'une unité vibrante faisant vibrer un organe tenu ou porté par un individu.

Selon un autre exemple, le calculateur 37 peut être déporté en dehors de la rondelle instrumentée 31 ou de la vis instrumentée éventuelles.

Selon un autre exemple, le calculateur 37 et le vérificateur 38 peuvent être agencés sur la rondelle instrumentée 31 ou la vis instrumentée éventuelle, un alerteur 40 déporté communiquant avec le vérificateur 38 via un lecteur 39.

Selon un autre exemple, le calculateur 37, le vérificateur 38 et l'alerteur 40 peuvent être agencés sur la rondelle instrumentée 31, la rondelle instrumentée 31 comprenant en outre une source d'énergie électrique.

En outre, au moins une interface homme-machine non illustrée peut permettre de déclencher des mesures et/ou des vérifications à des moments prédéterminés. Une telle interface peut prendre la forme d'un bouton ou d'un organe tactile par exemple. La manœuvre de l'interface peut induire une prise de mesure avec le ou les jauges de contrainte, le calcul d'une charge de serrage axiale voire la comparaison de cette charge de serrage axiale à une plage de conformité fixe ou calculée, puis le cas échéant l'émission d'une alerte.

Les figures 1 à 5 illustrent un procédé de serrage selon l'invention.

Un opérateur insère en premier lieu la tige filetée 17 dans un orifice de l'assemblage 1 et positionne le cas échéant le ou les senseurs 33 de tension dans la tige filetée voire la rondelle instrumentée, ou positionne la rondelle instrumentée sur la tige filetée 17 puis insère la tige filetée 17 dans l'assemblage. L'opérateur positionne alors un écrou à freiner 20 sur la zone d'extrémité 18 de la tige filetée 17.

Le procédé de serrage comporte alors une phase initiale de serrage 60.

Cette phase initiale de serrage 60 comprend un serrage 61 du système de vissage 10 à un couple nominal prédéterminé avec une clé dynamométrique 50. Un opérateur utilise la clé dynamométrique 50 afin d'appliquer un couple de serrage prédéterminé requis par le constructeur de l'assemblage 1.

Cette phase initiale de serrage 60 comprend ensuite une mesure 62 d'une charge de serrage axiale initiale dans le système de vissage 10 avec le système de mesure 30. Le ou les senseurs 33 de tension dans la tige filetée 17 émettent un ou des signaux de mesure respectifs. Le contrôleur 35, et par exemple son calculateur 37 précité, analyse ce ou ces signaux de mesure pour calculer la valeur de la charge de serrage axiale initiale.

Eventuellement, cette valeur de la charge de serrage axiale initiale est mémorisée durant une étape de mémorisation 68 dans une mémoire 36 de la rondelle instrumentée 31 ou déportée.

En référence à la figure 2, la phase initiale de serrage 60 comprend alors un ajustement 63 d'une position de l'écrou à freiner par rapport à la tige filetée 17 pour le placement dudit frein.

Durant cet ajustement 63 et en présence d'un écrou à créneaux, un opérateur peut vérifier que l'orifice traversant 19 débouche sur deux fentes de l'écrou à créneaux 20 afin de pouvoir positionner un frein 25.

Durant cet ajustement 63 et en présence d'un écrou coopérant avec une rondelle de freinage, un opérateur peut vérifier qu'une languette de la rondelle de freinage peut être pliée dans une encoche de l'écrou ou contre un pan de l'écrou.

Dans la négative, la phase initiale de serrage comporte un serrage ou desserrage, avec une clé 51, du système de vissage 10 pour que l'orifice traversant 19 débouche sur deux fentes de l'écrou à créneaux 20 ou qu'une languette puisse être pliée dans une encoche de l'écrou ou contre un pan de l'écrou. La clé 51 peut être une clé simple ou une clé dynamométrique 50.

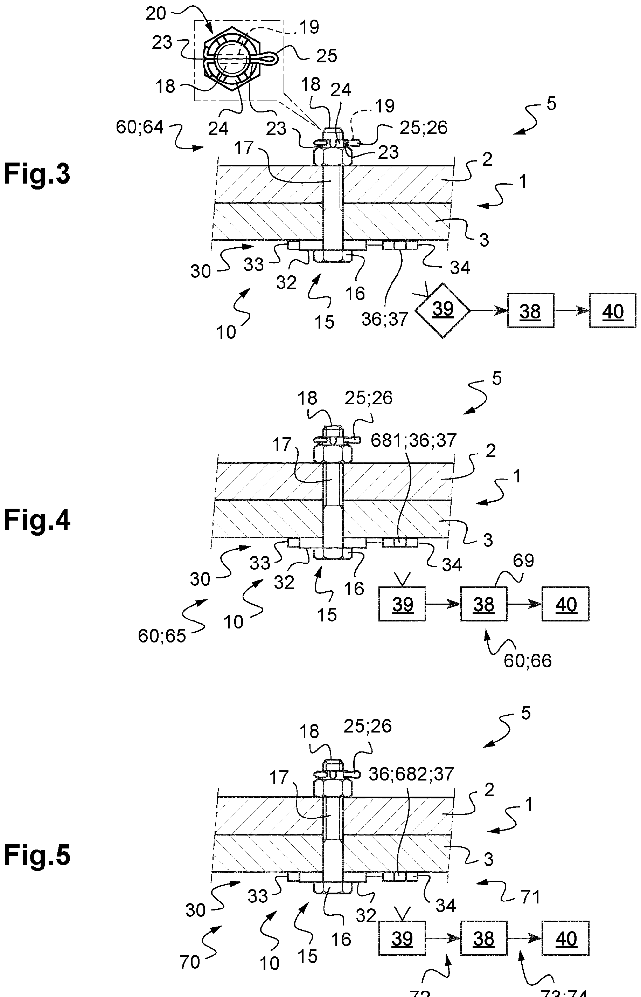

Suite à cet ajustement 63 et en référence à la figure 3, la phase initiale de serrage 60 peut comprendre un positionnement 64 du frein 25.

En présence d'un écrou à créneaux, le frein 25 traverse deux fentes 23 et l'orifice traversant 19. Par exemple, un tel frein 25 peut comporter une goupille 26 fendue.

En présence d'un système à languettes, une languette d'une rondelle de freinage peut être pliée dans une encoche ou contre un pan de l'écrou à freiner.

En référence à la figure 4, la phase initiale de serrage 60 comprend alors une mesure 65 d'une charge de serrage axiale finale avec le système de mesure 30. Le ou les senseurs 33 de tension dans la tige filetée 17 émettent un ou des signaux de mesure respectifs, le contrôleur 35, et par exemple le calculateur 37 précité, analysant ce ou ces signaux de mesure pour calculer la valeur de la charge de serrage axiale finale.

Eventuellement, cette valeur de la charge de serrage axiale finale est mémorisée durant une étape de mémorisation 681 dans une mémoire 36, de la rondelle instrumentée 31, de la vis instrumentée éventuelle ou bien encore déportée.

Selon une possibilité, la mesure 65 de la charge de serrage axiale finale avec le système de mesure 30 peut être réalisée à l'issue d'au moins une durée prédéterminée après l'ajustement d'une position de l'écrou à freiner par rapport à la tige filetée 17 pour le placement dudit frein, voire après le positionnement 64 du frein 25.

La phase initiale de serrage 60 comprend alors une vérification 66 que la charge de serrage axiale finale est comprise dans une plage de conformité. Le contrôleur 35, voire le vérificateur 38, peuvent être configurés pour réaliser cette vérification 66 que la charge de serrage axiale finale est comprise dans une plage de conformité.

La plage de conformité peut être une plage fixe mémorisée.

Alternativement, la plage de conformité peut être calculée par le système de mesure avant l'étape de vérification 66. Le contrôleur 35, voire le vérificateur 38, peuvent être configurés pour calculer ladite plage de conformité.

Selon une alternative, le procédé comporte alors un calcul 69 de la plage de conformité, la plage de conformité s'étendant de la charge de serrage axiale initiale moins une marge inférieure prédéterminée à la charge de serrage axiale initiale plus une marge supérieure prédéterminée.

Le contrôleur 35 peut alors transmettre un signal d'alerte à l'alerteur 40. Par exemple, l'alerteur 40 peut allumer une première diode lorsque la charge de serrage axiale finale n'est pas comprise dans la plage de conformité et une deuxième diode lorsque la charge de serrage axiale finale est comprise dans la plage de conformité.

Indépendamment de la manière de déterminer la plage de conformité, si la charge de serrage axiale finale n'est pas comprise dans la plage de conformité, la phase initiale de serrage 60 peut être entièrement refaite, éventuellement avec une autre tige filetée et/ou un autre écrou.

Selon la figure 5, le procédé de serrage peut en outre comprendre une ou des phases de vérification 70. Des phases de vérification 70 peuvent être réalisées périodiquement à une fréquence prédéterminée.

Chaque phase de vérification 70 comprend une mesure 71 d'une charge de serrage axiale de vérification avec le système de mesure 30. Cette phase de vérification 70 ne nécessite donc pas un desserrage/ resserrage du système de vissage.

La ou les jauges de contrainte 33 de la rondelle instrumentée 31 émettent un ou des signaux de mesure respectifs, le contrôleur 35 et par exemple le calculateur 37 précité analysant ce ou ces signaux de mesure pour calculer la valeur de la charge de serrage axiale de vérification.

Eventuellement, cette valeur de la charge de serrage axiale de vérification est mémorisée durant une étape de mémorisation 682 dans une mémoire 36 de la rondelle instrumentée 31 ou déportée.

La mémorisation des diverses charges de serrage axiale peut notamment permettre de garder un historique des interventions effectuées. Ces mémorisations 68, 681, 682 peuvent permettre de démontrer que le serrage initial, et les vérifications ultérieures ont été correctement effectués.

La phase de vérification 70 comprend alors une vérification 72 que la charge de serrage axiale de vérification est comprise dans la plage de conformité. Le contrôleur 35, voire le vérificateur 38, peuvent être configurés pour réaliser cette vérification 66 que la charge de serrage axiale finale est comprise dans une plage de conformité.

Ainsi, la phase de vérification 70 peut comporter une émission 73 d'une alerte de maintenance prédéterminée si la charge de serrage axiale de vérification est en dehors de la plage de conformité.

Le contrôleur 35 peut dans ces conditions transmettre un signal d'alerte à l'alerteur 40. Par exemple, l'alerteur 40 peut allumer une première diode lorsque la charge de serrage axiale de vérification n'est pas comprise dans la plage de conformité et une deuxième diode lorsque la charge de serrage axiale vérification est comprise dans la plage de conformité.

Sur un aéronef 5, la phase de vérification 70 peut comporter en particulier une émission 74 d'une interdiction de vol dès que la charge de serrage axiale de vérification est en dehors de la plage de conformité.

Par exemple, le contrôleur 35 est configuré pour émettre un signal d'interdiction de vol vers l'alerteur 40 dès que la charge de serrage axiale de vérification est en dehors de la plage de conformité. L'alerteur 40 génère alors une alerte d'interdiction de vol.

A l'inverse, le contrôleur 35 peut être configuré pour émettre un signal d'autorisation de vol vers l'alerteur 40 si la charge de serrage axiale de vérification est comprise dans la plage de conformité. L'alerteur 40 génère alors une alerte d'autorisation de vol.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention et des revendications.

## Revendications

1. Procédé de serrage et de contrôle d'un système de vissage (10) serrant un assemblage (1), le système de vissage (10) comprenant une tige filetée (17) et au moins un écrou à freiner (20) vissés l'un à l'autre ainsi qu'un frein (25) coopérant avec ladite tige filetée (17) et ledit écrou à freiner (20), **caractérisé par** un système de mesure (30) déterminant une charge de serrage axiale dans le système de vissage (10), le procédé comportant une phase initiale de serrage (60) comprenant successivement :
- serrage (61) du système de vissage (10) à un couple nominal prédéterminé avec une clé dynamométrique (50),
- mesure (62) d'une charge de serrage axiale initiale dans le système de vissage (10) avec le système de mesure (30),
- ajustement (63) d'une position de l'écrou à freiner (20) par rapport à la tige filetée (17) pour le placement dudit frein,
- mesure (65) d'une charge de serrage axiale finale avec le système de mesure (30),
- vérification (66) que la charge de serrage axiale finale est comprise dans une plage de conformité.

2. Procédé selon la revendication 1,
**caractérisé en ce que** le procédé comporte une phase de vérification (70) comprenant : mesure (71) d'une charge de serrage axiale de vérification avec le système de mesure (30) et vérification (72) que la charge de serrage axiale de vérification est comprise dans la plage de conformité.

3. Procédé selon la revendication 2,
**caractérisé en ce que** ladite phase de vérification (70) est réalisée périodiquement à une fréquence prédéterminée.

4. Procédé selon l'une quelconque des revendications 2 à 3, **caractérisé en ce que** ledit procédé comporte une émission (73) d'une alerte de maintenance prédéterminée si la charge de serrage axiale de vérification est en dehors de la plage de conformité.

5. Procédé selon l'une quelconque des revendications 2 à 4, **caractérisé en ce que** le système de vissage (10) est agencé sur un aéronef (5), ledit procédé comportant l'émission (74) d'une interdiction de vol dès que la charge de serrage axiale de vérification est en dehors de la plage de conformité.

6. Procédé selon l'une quelconque des revendications 1 à 5, **caractérisé en ce que** ledit procédé comporte une mémorisation (68, 681) de la charge de serrage axiale initiale, ou de la charge de serrage axiale finale, ou de la charge de serrage axiale initiale et de la charge de serrage axiale finale.

7. Procédé selon l'une quelconque des revendications 1 à 6, **caractérisé en ce que** ladite plage de conformité est prédéterminée.

8. Procédé selon l'une quelconque des revendications 1 à 6, **caractérisé en ce que** ledit procédé comporte un calcul (69) de la plage de conformité, la plage de conformité s'étendant de la charge de serrage axiale initiale moins une marge inférieure prédéterminée à la charge de serrage axiale initiale plus une marge supérieure prédéterminée.

9. Procédé selon l'une quelconque des revendications 1 à 8, **caractérisé en ce que** préalablement à la mesure d'une charge de serrage axiale finale avec le système de mesure (30), le procédé comporte un positionnement (64) du frein (25)

10. Procédé selon l'une quelconque des revendications 1 à 9, **caractérisé en ce que** la tige filetée (17) comprenant un orifice traversant (19), l'écrou à freiner (20) étant un écrou à créneau comprenant une pluralité de fentes (23) réparties en azimut autour d'un axe (AX), le frein (25) traverse lesdites deux fentes (23) et ledit orifice traversant (19).

11. Procédé selon l'une quelconque des revendications 1 à 10, **caractérisé en ce que** ladite mesure (65) d'une charge de serrage axiale finale avec le système de mesure (30) est réalisée à l'issue d'au moins une durée prédéterminée après ledit ajustement d'une position de l'écrou à freiner (20) par rapport à la tige filetée (17) pour le placement dudit frein ou après un positionnement (64) du frein (25).

12. Système de contrôle (80) pour contrôler un serrage d'un système de vissage (10) serrant un assemblage (1), le système de vissage (10) comprenant une tige filetée (17) et un écrou à freiner (20) vissés l'un à l'autre ainsi qu'un frein (25) coopérant avec ladite tige filetée (17) et ledit écrou à freiner (20), le système de contrôle (80) comprenant un système de mesure (30) déterminant une charge de serrage axiale dans le système de vissage (10), le système de mesure (30) comprenant au moins un senseur (33) de tension dans la tige filetée,
**caractérisé en ce que** le système de contrôle (80) est configuré pour appliquer le procédé selon l'une quelconque des revendications 1 à 11, le système de contrôle (80) comprenant un contrôleur (35) configuré pour effectuer ladite vérification (66) que la charge de serrage axiale finale est comprise dans la plage de conformité.

13. Système de contrôle selon la revendication 12,
**caractérisé en ce que** ledit contrôleur (35) est configuré pour calculer ladite plage de conformité.

14. Système de contrôle selon l'une quelconque des revendications 12 à 13,
**caractérisé en ce que** le contrôleur (35) est configuré pour effectuer une vérification (72) que la charge de serrage axiale de vérification est dans la plage de conformité.

15. Système de contrôle selon la revendication 14,
**caractérisé en ce que** le contrôleur (35) est configuré pour émettre une interdiction de vol en fonction de ladite vérification (72) que la charge de serrage axiale de vérification est dans la plage de conformité.

## Patentansprüche

1. Verfahren zum Anziehen und Kontrollieren eines Schraubsystems (10) zum Festziehen einer Baugruppe (1), wobei das Schraubsystem (10) eine Gewindestange (17) und mindestens eine zu sichernde Mutter (20), die miteinander verschraubt sind, sowie eine Bremse (25) umfasst, die mit der Gewindestange (17) und der zu sichernden Mutter (20) zusammenwirkt,
**gekennzeichnet durch** ein Messsystem (30), das eine axiale Klemmlast in dem Schraubsystem (10) bestimmt, wobei das Verfahren eine anfängliche Anzugsphase (60) umfasst, die nacheinander umfasst:
- Anziehen (61) des Schraubsystems (10) auf ein vorgegebenes Nenndrehmoment mit einem Drehmomentschlüssel (50),
- Messen (62) einer Anfangs-Axialklemmlast in dem Schraubsystem (10) mit dem Messsystem (30),
- Einstellen (63) einer Position der zu sichernden Mutter (20) in Bezug auf die Gewindestange (17) zur Platzierung der Bremse,
- Messen (65) einer End-Axialklemmlast mit dem Messsystem (30),
- Verifizieren (66), dass die End-Axialklemmlast innerhalb eines Konformitätsbereichs liegt.

2. Verfahren nach Anspruch 1,
**dadurch gekennzeichnet, dass** das Verfahren eine Verifizierungsphase (70) umfasst, die umfasst: Messen (71) einer Verifizierungs-Axialklemmlast mit dem Messsystem (30), Verifizieren (72), dass die Verifizierungs-Axialklemmlast innerhalb des Konformitätsbereichs liegt.

3. Verfahren nach Anspruch 2,
**dadurch gekennzeichnet, dass** die Verifizierungsphase (70) periodisch mit einer vorgegebenen Häufigkeit durchgeführt wird.

4. Verfahren nach einem der Ansprüche 2 bis 3,
**dadurch gekennzeichnet, dass** das Verfahren ein Ausgeben (73) eines vorgegebenen Wartungshinweises umfasst, wenn die Verifizierungs-Axialklemmlast außerhalb des Konformitätsbereichs liegt.

5. Verfahren nach einem der Ansprüche 2 bis 4,
**dadurch gekennzeichnet, dass** das Schraubsystem (10) an einem Luftfahrzeug (5) angeordnet ist, wobei das Verfahren das Ausgeben (74) eines Flugverbots umfasst, sobald die Verifizierungs-Axialklemmlast außerhalb des Konformitätsbereichs liegt.

6. Verfahren nach einem der Ansprüche 1 bis 5,
**dadurch gekennzeichnet, dass** das Verfahren ein Speichern (68, 681) der Anfangs-Axialklemmlast oder der End-Axialklemmlast oder der Anfangs-Axialklemmlast und der End-Axialklemmlast umfasst.

7. Verfahren nach einem der Ansprüche 1 bis 6,
**dadurch gekennzeichnet, dass** der Konformitätsbereich vorgegeben ist.

8. Verfahren nach einem der Ansprüche 1 bis 6,
**dadurch gekennzeichnet, dass** das Verfahren ein Berechnen (69) des Konformitätsbereichs umfasst, wobei sich der Konformitätsbereich von der Anfangs-Axialklemmlast abzüglich einer vorgegebenen unteren Marge bis zur Anfangs-Axialklemmlast zuzüglich einer vorgegebenen oberen Marge erstreckt.

9. Verfahren nach einem der Ansprüche 1 bis 8,
**dadurch gekennzeichnet, dass** das Verfahren vor dem Messen einer End-Axialklemmlast mit dem Messsystem (30) ein Positionieren (64) der Bremse (25) umfasst.

10. Verfahren nach einem der Ansprüche 1 bis 9,
**dadurch gekennzeichnet, dass** die Gewindestange (17) eine Durchgangsöffnung (19) aufweist, die zu sichernde Mutter (20) eine Kronenmutter ist, die eine Mehrzahl von azimutal um eine Achse (AX) verteilten Schlitzen (23) aufweist, und die Bremse (25) durch die beiden Schlitze (23) und die Durchgangsöffnung (19) hindurchgeführt wird.

11. Verfahren nach einem der Ansprüche 1 bis 10,
**dadurch gekennzeichnet, dass** das Messen (65) einer End-Axialklemmlast mit dem Messsystem (30) nach Ablauf von mindestens einer vorgegebenen Zeit nach dem Einstellen einer Position der zu sichernden Mutter (20) relativ zu der Gewindestange (17) zum Anbringen der Bremse oder nach einem Positionieren (64) der Bremse (25) durchgeführt wird.

12. Kontrollsystem (80) zum Kontrollieren eines Anziehens eines Schraubsystems (10) zum Festziehen einer Baugruppe (1), wobei das Schraubsystem (10) eine Gewindestange (17) und eine zu sichernde Mutter (20), die miteinander verschraubt sind, sowie eine Bremse (25) umfasst, die mit der Gewindestange (17) und der zu sichernden Mutter (20) zusammenwirkt, wobei das Kontrollsystem (80) ein Messsystem (30) umfasst, das eine Axialklemmlast in dem Schraubsystem (10) bestimmt, wobei das Messsystem (30) mindestens einen Sensor (33) für die Spannung in der Gewindestange umfasst,
**dadurch gekennzeichnet, dass** das Kontrollsystem (80) konfiguriert ist, um das Verfahren nach einem der Ansprüche 1 bis 11 anzuwenden, wobei das Kontrollsystem (80) einen Controller (35) umfasst, der konfiguriert ist, um die Überprüfung (66) durchzuführen, dass die End-Axialklemmlast innerhalb des Konformitätsbereichs liegt.

13. Kontrollsystem nach Anspruch 12,
**dadurch gekennzeichnet, dass** der Controller (35) konfiguriert ist, um den Konformitätsbereich zu berechnen.

14. Kontrollsystem nach einem der Ansprüche 12 bis 13,
**dadurch gekennzeichnet, dass** die Steuereinheit (35) konfiguriert ist, um eine Überprüfung (72) durchzuführen, dass die Verifizierungs-Axialklemmlast innerhalb des Konformitätsbereichs liegt.

15. Kontrollsystem nach Anspruch 14,
**dadurch gekennzeichnet, dass** der Controller (35) konfiguriert ist, um basierend auf der Überprüfung (72), ob die Verifizierungs-Axialklemmlast innerhalb des Konformitätsbereichs liegt, ein Flugverbot auszugeben.

## Claims

1. Method for tightening and controlling a screwing system (10) tightening an assembly (1), the screwing system (10) comprising a threaded rod (17) and at least one locknut (20) screwed together as well as a locking mechanism (25) cooperating with said threaded rod (17) and said locknut (20), **characterized by** a measurement system (30) determining an axial tightening load in the screwing system (10), the method having an initial tightening phase (60) comprising in succession:
- tightening (61) the screwing system (10) to a predetermined nominal torque using a torque spanner (50),
- measuring (62) an initial axial tightening load in the screwing system (10) using the measurement system (30),
- adjusting (63) a position of the locknut (20) relative to the threaded rod (17) for placing said locking mechanism,
- measuring (65) a final axial tightening load using the measurement system (30),
- verifying (66) that the final axial tightening load falls within a compliance range.

2. Method according to Claim 1, **characterized in that** the method has a verification phase (70) comprising: measuring (71) a verification axial tightening load using the measurement system (30) and verifying (72) that the verification axial tightening load falls within the compliance range.

3. Method according to Claim 2, **characterized in that** said verification phase (70) is carried out periodically at a predetermined frequency.

4. Method according to either one of Claims 2 or 3, **characterized in that** said method includes transmitting (73) a predetermined maintenance alert if the verification axial tightening load falls outside the compliance range.

5. Method according to one of Claims 2 to 4, **characterized in that** the screwing system (10) is arranged on an aircraft (5), said method including issuing (74) a ban on flights once the verification axial tightening load falls outside the compliance range.

6. Method according to one of Claims 1 to 5, **characterized in that** said method includes storing (68, 681) the initial axial tightening load, or the final axial tightening load, or the initial axial tightening load and the final axial tightening load.

7. Method according to one of Claims 1 to 6, **characterized in that** said compliance range is predetermined.

8. Method according to one of Claims 1 to 6, **characterized in that** said method includes calculating (69) the compliance range, the compliance range extending from the initial axial tightening load minus a predetermined lower margin to the initial axial tightening load plus a predetermined upper margin.

9. Method according to one of Claims 1 to 8, **characterized in that** prior to measuring a final axial tightening load using the measurement system (30), the method includes positioning (64) the locking mechanism (25).

10. Method according to one of Claims 1 to 9, **characterized in that** the threaded rod (17) comprising a through-hole (19), the locknut (20) being a castellated nut comprising a plurality of slots (23) distributed in azimuth around an axis (AX), the locking mechanism (25) passes through said two slots (23) and said through-hole (19).

11. Method according to one of Claims 1 to 10, **characterized in that** said measurement (65) of a final axial tightening load using the measurement system (30) is performed at the end of at least a predetermined period after said adjustment of a position of the locknut (20) relative to the threaded rod (17) for placing said locking mechanism or after the locking mechanism (25) has been positioned (64).

12. Control system (80) for controlling tightening of a screwing system (10) tightening an assembly (1), the screwing system (10) comprising a threaded rod (17) and a locknut (20) screwed together as well as a locking mechanism (25) cooperating with said threaded rod (17) and said locknut (20), the control system (80) comprising a measurement system (30) determining an axial tightening load in the screwing system (10), the measurement system (30) comprising at least one tension sensor (33) in the threaded rod, **characterized in that** the control system (80) is designed to carry out the method according to one of Claims 1 to 11, the control system (80) comprising a controller (35) designed to perform said verification (66) that the final axial tightening load falls within the compliance range.

13. Control system according to Claim 12, **characterized in that** said controller (35) is designed to calculate said compliance range.

14. Control system according to either one of Claims 12 or 13,
**characterized in that** the controller (35) is designed to verify (72) that the verification axial tightening load falls within the compliance range.

15. Control system according to Claim 14, **characterized in that** the controller (35) is designed to issue a ban on flights as a function of said verification (72) that the verification axial tightening load falls within the compliance range.
